# EUROPÄISCHE PATENTSCHRIFT

(11) **EP 1 985 502 B1**
(45) Veröffentlichungstag und Bekanntmachung des Hinweises auf die Patenterteilung: **30.12.2009**
(21) Anmeldenummer: 07022910.9
(22) Anmeldetag: 27.11.2007
(51) Int. Cl.: B60R 16/02, B66F 9/075

(54) **Kabelführung in einer Antriebseinheit eines deichselgelenkten Flurförderzeugs**
Cable duct in the drive unit of an industrial truck with a tiller
Passage de câbles dans une unité d'entraînement d'un chariot de manutention à timon

(30) Priorität: 26.04.2007 DE 202007005966 U
(43) Veröffentlichungstag der Anmeldung: 29.10.2008
(73) Patentinhaber: Jungheinrich Aktiengesellschaft, 22047 Hamburg (DE)
(72) Erfinder: Nagel, Markus, Dipl.-Ing., 20146 Hamburg (DE)
(74) Vertreter: Graalfs, Edo

(56) Entgegenhaltungen:
- EP-A- 1 241 038
- EP-B- 1 050 091
- DE-U-202005 020 623

## Beschreibung

Die Erfindung bezieht sich auf ein deichselgelenktes Flurförderzeug nach Patentanspruch 1.

Wie aus EP 1 241 038A oder DE 20 2005 020 623 U1 bekannt, ist bei Flurförderzeugen mit Deichsellenkung nach dem Oberbegriff des Anspruchs 1 im Mitgehbetrieb die Deichsel üblicherweise an einem Schemel horizontal schwenkbar angelenkt. Der Drehschemel hält den Fahrmotor zum Antrieb des ebenfalls im Drehschemel gelagerten Antriebsrades über ein Getriebe. Die Ansteuerung des Fahrmotors erfolgt mit Hilfe von Bedienelementen, die am Kopf der Deichsel angebracht sind. Aus dem obigen Grunde ist der Antriebsmotor relativ zum Rahmen schwenkbar. Die Kabel zur Energieversorgung des Antriebsmotors müssen daher über eine geeignete Kabelführung zum Antriebsmotor im Drehschemel geführt werden. In EP 1 241 038 A1 ist am Drehschemel ein Zapfen offenbart, der in einem Wälzlager sitzt, das seinerseits in einem rahmenfesten Lagerbauteil angeordnet ist. Im Zapfen ist ein Durchgang für einen Kabelbaum vorgesehen.

Wenn keine besonderen Maßnahmen getroffen werden, besteht die Gefahr, daß der Kabelbaum, zu dem die durchgeführten Kabel normalerweise zusammengefaßt werden, sich in Durchführungsrichtung hinein- oder herausbewegen kann. Es ist zwar möglich, zwischen dem Kabelbaum und der Durchführung eine Klemmung vorzusehen, in dem die Durchführung im Hinblick auf den Durchmesser des Kabelbaums ausgelegt wird. Es können jedoch unterschiedlich dicke Kabelbäume zum Einsatz gelangen, so daß diese Maßnahme nicht greift. Außerdem ist es notwendig, das Kabel nicht klemmend durch den Durchgang hindurchzuführen, weil sonst das Kabel bzw. der Kabelbaum jede Drehung des Drehschemels mitmachen und entsprechend belastet würde.

Der Erfindung liegt die Aufgabe zugrunde, ein deichselgeführtes Flurförderzeug zu schaffen, bei dem ein geeignetes Führungselement für das oder die Kabel sicher im Durchgang des Deichselbocks gehalten ist.

Diese Aufgabe wird durch die Merkmale des Anspruchs 1 gelöst.

Bei der Erfindung nimmt der Durchgang eine achsparallel gestützte Durchführungshülse aus Kunststoff auf, die am unteren Ende mindestens eine radial nach außen weisende Nase hat. Die Nase greift in eine Ringnut ein, die im Durchgang geformt ist. Beim Einsetzen wird die Hülse radial ein wenig zusammengedrückt, bis die Nase in die Ringnut einschnappt. Anschließend sitzt die Hülse im Durchgang und kann nicht ohne weiteres herausgezogen werden. Außerdem ermöglicht die Hülse eine Relativdrehung zum Durchgang, wodurch die Kabel bei dem Verschwenken der Antriebseinheit nicht tordiert oder in gleichem Maße gedreht werden.

Nach einer Ausgestaltung der Erfindung weist die Durchführungshülse im Abstand zum unteren Ende mindestens eine weitere nach außen ragende Nase auf, die sich gegen eine den Durchgang umgebende ringförmige Schulterfläche von oben anlegt. Auf diese Weise ist die Durchführungshülse sicher im Durchgang geführt und weist eine zusätzliche Sicherung gegen ein Einwandern in das Innere des Durchgangs auf.

Nach einer weiteren Ausgestaltung der Erfindung ist ein sich oberhalb des Durchgangs erstreckender Abschnitt der Hülse so ausgeschnitten, daß ein Ringsegment gebildet ist. Das Ringsegment weist einen achsparallelen Schlitz auf. Am oberen Ende des Ringsegments ist nahe dem Schlitz mindestens eine dritte radial nach außen weisende Nase geformt. Im Bereich des Ringsegments kann ein Kabelband um das Kabel bzw. den Kabelbaum und das Ringsegment oder einen Teil des Ringsegments herumgeschlungen werden. Dadurch können Kabelbäume unterschiedlicher Dicke wirksam an der Durchführungshülse festgelegt werden. Die dritte Nase verhindert, daß das Kabelband nach oben rutscht, wenn es durch den Schlitz geführt ist.

Der Schlitz verbessert die Anpassungsmöglichkeit bei der Aufnahme unterschiedlich dicker Kabelbäume.

Schließlich ist nach einer Ausgestaltung der Erfindung vorgesehen, daß der Durchgang in einem zylindrischen Zapfen gebildet ist, der am Deichselbock angeordnet ist und der in ein Wälzlager eingreift, das in einem rahmenfesten Lagerbauteil angebracht ist.

Ein Ausführungsbeispiel der Erfindung wird nachfolgend anhand von Zeichnungen näher erläutert.
- Fig. 1: zeigt perspektivisch einen Deichselbock für eine Antriebseinheit eines deichselgelenkten Flurförderzeugs mit einer erfindungsgemäßen Kabelführung teilweise im Schnitt.
- Fig. 2: zeigt perspektivisch eine Kunststoffhülse für die erfindungsgemäße Kabelführung.
- Fig. 3: zeigt perspektivisch die Lagerung des Deichselbocks nach Fig. 1 in einem rahmenfesten Lagerbauteil.

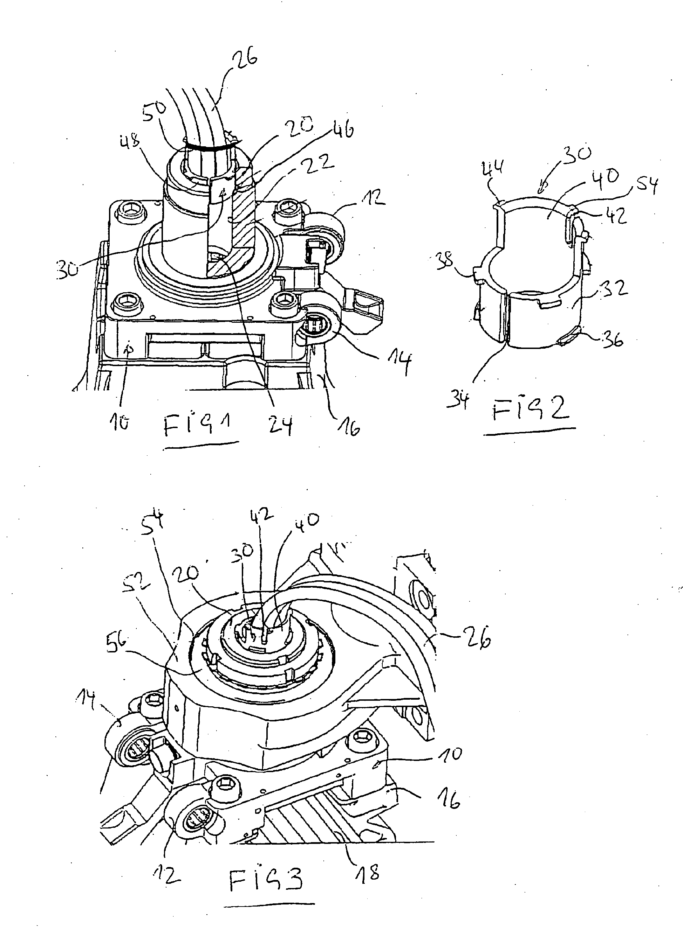

In den Figuren 1 und 3 ist ein Deichselbock 10 in Form einer quadratischen Platte zu erkennen, die an einem Ende zwei beabstandete Augen 12, 14 aufweist zur Lagerung einer nicht gezeigten Deichsel um eine horizontale Achse. Sie gehört zu einem deichselgeführten Mitgeh-Flurförderzeug, der nicht dargestellt und allgemein bekannt ist. Der Deichselbock 10 ist auf der Oberseite eines nicht weiter dargestellten Drehschemels 16 angebracht, der einen Elektromotor, ein Antriebsrad und ein Getriebe zwischen Antriebsrad und Elektromotor trägt. Der Elektromotor ist bei 18 in Figur 3 angedeutet. Auch diese Anordnung ist allgemein bekannt.

An der Oberseite des Deichselbocks 10 ist ein zylindrischer Zapfen 20 vorgesehen mit einem zylindrischen Durchgang 22. Der Zapfen 20 ist in Figur 1 aufgeschnitten gezeigt. Der Durchgang 22 ist mit einer Öffnung 24 im Deichselbock 10 ausgerichtet.

Zur Versorgung des Elektromotors 18 müssen Kabel in den Schemel 16 eingeführt werden. Dies geschieht über den Durchgang 22. In den Figuren 1 und 3 ist ein Kabelbündel 26 gezeigt, das am anderen Ende mit einem Leistungsteil des nicht gezeigten Flurförderzeugs verbunden ist zur Versorgung des Elektromotors 18 mit Drehstrom. In Figur 1 ist das Kabelbündel 26 nur im oberen Bereich gezeigt und nicht im Durchgang 22.

In den Durchgang 22 ist eine Durchführungshülse 30 eingesetzt. Sie ist in Figur 2 deutlicher dargestellt. Die Durchführungshülse 30 weist einen unteren ringzylindrischen Abschnitt 32 auf, der mit einem achsparallelen Schlitz 34 versehen ist. Am unteren Rand des Abschnitts 32 sind mehrere radial nach außen weisende Nasen 36 vorgesehen. Am oberen Ende des Abschnitts 32 sind ebenfalls radial nach außen weisende Nasen 38 vorgesehen. Oberhalb des ringzylindrischen Abschnitts 32 erstreckt sich ein Ringsegment 40, und zwar annähernd um einen Winkel von z. B. 160°. Das Ringsegment 40 ist mit einem achsparallelen Schlitz 42 geformt. Außerdem sind am oberen Rand mehrere radial nach außen weisende Nasen 44 geformt. Eine Nase 54 befindet sich neben Schlitz 42. Die einzelnen Nasen 36, 38, 44 und 54 sind in Umfangsrichtung so zueinander versetzt, daß eine einfache Formung aus Kunststoff möglich ist.

Wie aus Figur 1 zu erkennen, ist der Abschnitt 32 in den Durchgang 22 eingesetzt, wobei die Nasen 36 in eine Ringnut 46 im Inneren des Durchgangs eingreifen. Um diese formflüssige Verbindung herzustellen, ist erforderlich, beim Einsetzen der Durchführungshülse 30 den Abschnitt 32 etwas zusammenzudrücken, bis die Nasen 36 in die Nut 46 eingreifen. Ist dies geschehen, liegen die Nasen 38 gegen eine Schulterfläche 48, die den Durchgang 22 am oberen Ende umgibt, auf.

Im Bereich des Ringsegments 40 ist ein Kabelband 50 um das Kabelbündel 26 herumgelegt, wobei die oberen Nasen 44 das Kabelband 50 daran hindern, nach oben über das Ringsegment 40 hinauszurutschen. Die Nase 54 verhindert das Rutschen des Kabelbands nach oben, wenn es durch den Schlitz 54 geführt ist, um einen dünneren Kabelbaum festzulegen.

In Figur 3 ist ein rahmenfestes Lagerbauteil 52 dargestellt mit einer kreisförmigen Öffnung, welche ein Wälzlager 56 aufnimmt, dessen Innenring den Zapfen 20 des Deichselbocks 10 aufnimmt. Bei einer Drehung des Deichselbocks 10 bzw. des Drehschemels 16 kann die Durchführungshülse 30 die Drehung entweder mitmachen, teilweise ausführen oder rahmenfest bleiben, so daß das Kabelbündel 26 nicht tordiert wird.

## Patentansprüche

1. Deichselgefiihrtes Flurförderzeug, das einen Drehschemel aufweist, der ein Antriebsrad und einen Antriebsmotor mit Getriebe hält und der um eine vertikale Achse schwenkbar im Rahmen des Flurförderzeugs gelagert ist, wobei ein Deichselbock am Drehschemel angebracht ist, an dem eine Deichsel um eine horizontale Achse schwenkbar gelagert ist und der einen annähernd vertikalen, annähernd zylindrischen Durchgang für ein Kabelbündel aufweist, **dadurch gekennzeichnet, daß** der Durchgang (22) eine teilweise achsparallel geschlitzte Durchführungshülse (30) aus Kunststoff aufnimmt, die am unteren Ende mindestens eine radial nach außen weisende Nase (36) aufweist, die in eine Ringnut (46) im Durchgang (22) eingreift und die Durchführungshülse axial festlegt.

2. Flurförderzeug nach Anspruch 1, **dadurch gekennzeichnet, daß** ein sich oberhalb des Durchgangs (22) erstreckender Abschnitt der Durchführungshülse (30) so ausgeschnitten ist, daß ein Ringsegment (40) gebildet ist, das Ringsegment (40) einen achsparallelen Schlitz (42) aufweist und am oberen Ende des Ringsegments (40) nahe dem Schlitz (42) mindestens eine dritte radial nach außen weisende Nase (44) geformt ist.

3. Flurförderzeug nach Anspruch 1 oder 2, **dadurch gekennzeichnet, daß** die Durchführungshülse (30) im Abstand zum unteren Ende mindestens eine weitere radial nach außen aufweisende Nase (38) hat, die sich gegen eine den Durchgang (22) umgebende ringförmige Schulterfläche (48) von oben anlegt.

4. Flurförderzeug nach einem der Ansprüche 1 bis 3, **dadurch gekennzeichnet, daß** der Durchgang (22) in einem zylindrischen Zapfen (20) des Deichselbocks (10) gebildet ist, der in ein Wälzlager (56) eingreift, das in einem rahmenfesten Lagerbauteil (52) angeordnet ist.

## Claims

1. Industrial truck guided by a tiller and having a fifth wheel which holds a driving wheel and a drive motor with gearbox and which is mounted pivotally around a vertical axis in the frame of the industrial truck, wherein a tiller block is attached to the fifth wheel on which a tiller is mounted pivotally around a horizontal axis and which features an approximately vertical, approximately cylindrical passage for a bunched cable, **characterised in that** the passage (22) accommodates a partially axis parallel slotted bushing (30) made of plastic material, which features on its lower end a nose (36) pointing radially outwardly and engaging into an annular slot (46) in the passage (22) and thereby immobilizing the bushing axially.

2. Industrial truck according to claim 1, **characterised in that** a portion of the bushing (30) extending above the passage (22) is cut out such that an annular segment (40) is formed, the annular segment (40) features an axis parallel slit (42) and at least one third nose (44) pointing radially outwardly is formed on the upper end of the annular segment (40) near to the slit (42).

3. Industrial truck according to claim 1 or 2, **characterised in that** the bushing (30) has at least one further nose (38) pointing radially outwardly in a distance from the lower end, which contacts an annular shoulder surface (48) surrounding the passage (22) from out the upside.

4. Industrial truck according to any one of claims 1 to 3, **characterised in that** the passage (22) is formed in a cylindrical pin (20) of the tiller block (10), which engages into an anti friction bearing (56) that is arranged in a frame-stationary bearing element (52).

## Revendications

1. Chariot de manutention guidé par timon et présentant un tabouret tournant qui tient une roué motrice et un moteur de propulsion avec une boîte de vitesses et qui est logé de façon pivotante autour d'un axe vertical dans le cadre du chariot de manutention, un support de timon étant monté sur le tabouret tournant dans lequel un timon est logé de façon pivotante autour d'un axe horizontal et qui présente un passage approximativement vertical et approximativement cylindrique pour un faisceau de câbles, **caractérisé en ce que** le passage (22) accueille un manchon de traversée (30) en matière plastique partiellement fendu parallèle à l'axe, qui présente au moins un nez (36) radialement indiquant à dehors dans l'extrémité inférieure et qui s'engrène dans une rainure annulaire (46) dans le passage (22) et axialement immobilise ainsi le manchon de traversée.

2. Chariot de manutention selon la revendication 1, **caractérisé en ce que** une part du manchon de traversée (30) s'étendant au-dessus du passage (22) est coupée tellement que un segment annulaire (40) est formé, le segment annulaire (40) présentant une fente (42) parallèle à l'axe, et que au moins un troisième nez (44) radialement indiquant à dehors est formé dans l'extrémité supérieure du segment annulaire (40) près de la fente (42).

3. Chariot de manutention selon la revendication 1 ou 2, **caractérisé en ce que** le manchon de traversée (30) a au moins un autre nez (38) radialement indiquant à dehors dans un écart à l'extrémité inférieure, qui contacte une surface d'épaule annulaire (48) entourant le passage (22) à partir de dessus.

4. Chariot de manutention selon l'une quelconque des revendications 1 à 3, **caractérisé en ce que** le passage (22) est formé dans une tige (20) cylindrique du support de timon (10), qui s'engrène dans un palier à roulement (56) qui est disposé dans un élément de palier (52) stationnaire par rapport au cadre.
